(19) Europäisches Patentamt / European Patent Office / Office européen des brevets

(11) **EP 4 371 785 B1**

(12) **EUROPEAN PATENT SPECIFICATION**

(45) Date of publication and mention
of the grant of the patent:
**18.02.2026 Bulletin 2026/08**

(51) International Patent Classification (IPC):
*B60C 9/00* *(2006.01)*     *B60C 9/04* *(2006.01)*
*B60C 9/22* *(2006.01)*     *B60C 9/26* *(2006.01)*
*B60C 11/00* *(2006.01)*     *B60C 11/01* *(2006.01)*
*B60C 11/03* *(2006.01)*

(21) Application number: **23209939.0**

(22) Date of filing: **14.11.2023**

(52) Cooperative Patent Classification (CPC):
**B60C 11/0332; B60C 9/005; B60C 9/04;
B60C 9/2204; B60C 9/263; B60C 11/0083;
B60C 11/01;** B60C 2011/013; B60C 2200/02

(54) **AIRCRAFT RADIAL TIRE**

FLUGZEUGRADIALREIFEN

PNEUMATIQUE RADIAL POUR AVION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.11.2022 US 202218055510**

(43) Date of publication of application:
**22.05.2024 Bulletin 2024/21**

(73) Proprietor: **The Goodyear Tire & Rubber
Company
Akron, OH 44316 (US)**

(72) Inventors:
• **UEYOKO, Kiyoshi
Copley, 44321 (US)**
• **DAS, Badal
Strongsville, 44136 (US)**

(74) Representative: **Kutsch, Bernd
Goodyear S.A.
Patent Department
Avenue Gordon Smith
7750 Colmar-Berg (LU)**

(56) References cited:
EP-A1- 1 800 902     EP-A1- 2 394 822
US-A1- 2016 068 023

**Description**

FIELD OF THE INVENTION

The present invention relates generally to pneumatic tires and preferably to radial aircraft tires.

BACKGROUND

Aircraft tires are subject to extreme operating conditions including a heavy load per tire coupled with high speeds. Further, prolonged taxiing can build up high heat. The foregoing and other factors cause tread wear.

When a tire spins at very high speeds, the tire experiences high angular acceleration and velocity, which can lead to uneven wear on the tire tread. Uneven tread wear can shorten the useful life of the tire because it only takes a single location of wear to get to unacceptable thickness or wear values to replace the tire, even if a majority of the tire tread is still within acceptable thickness or wear values.

Once a tread is sufficiently worn, the tire is typically re-treaded, which saves costs relative to just disposing of worn tires. Retreading may occur several times for a single tire. However, as the tread wears beyond an acceptable level, the tire is required to be removed from service and be re-treaded, which still has associated costs and down time. Therefore, extending the useful life of the tread, for example, by reducing uneven tread wear, is very desirable.

EP 1 800 902 A1 describes a tire in accordance with the preamble of claim 1

EP 2 394 822 A1 describes an aircraft tire having a zigzag belt reinforcing structure.

SUMMARY OF THE INVETION

The invention relates to a tire in accordance with claim 1.

Dependent claims refer to preferred embodiments of the invention.

A pneumatic tire in accordance with the invention comprises: a carcass; a belt reinforcing structure comprising a plurality of belt layers that include at least one spiral belt layer and at least one zigzag belt layer, each of the at least one spiral belt layers having cords arranged at an angle of 5° or less with respect to an equatorial plane of the pneumatic tire and each of the at least one zigzag belt layers having cords arranged at an angle of 5° to 40° with respect to the equatorial plane and extending in alternation to turnaround points at each lateral edge of the belt reinforcing structure, wherein a first belt layer of the plurality of belt layers located radially outward of the carcass is one of the at least one spiral belt layer, and wherein the first belt has a belt width less than a widest belt layer of the plurality of belt layers; and a tread comprising two or more main grooves extending circumferentially continuously around the pneumatic tire and defining a plurality of ribs that include two axially outermost ribs, wherein, at 10% to 100% of rated pressure and no load, each of the two axially outermost ribs are raised in relation to a respective next nearest rib located axially inward of the respective axially outermost rib.

Also disclosed is a pneumatic tire comprising: a carcass; a belt reinforcing structure comprising a plurality of belt layers that include at least one spiral belt layer and at least one zigzag belt layer, each of the at least one spiral belt layers having cords arranged at an angle of 5° or less with respect to an equatorial plane of the pneumatic tire and each of the at least one zigzag belt layers having cords arranged at an angle of 5° to 40° with respect to the equatorial plane and extending in alternation to turnaround points at each lateral edge of the belt reinforcing structure, wherein a first belt layer of the plurality of belt layers located radially outward of the carcass is one of the at least one spiral belt layer, and wherein the first belt has a belt width less than a widest belt layer of the plurality of belt layers; and a tread comprising two or more main grooves extending circumferentially continuously around the pneumatic tire and defining a plurality of ribs that include two axially outermost ribs and a central rib, and wherein the pneumatic tire at a rated pressure and a rated load has a footprint shape factor (FSF) of 0.8 to 0.98.

BRIEF DESCRIPTION OF THE DRAWINGS

At least some embodiments of the present invention will be described by way of example and with reference to the accompanying drawings.

FIG. 1 illustrates a cross-sectional view of one half of an aircraft radial tire according to at least one embodiment of the present invention.

FIG. 2A illustrates a cross-sectional view of the aircraft radial tire showing the full portion of the tread. FIG. 2B illustrates an extract from FIG. 2A.

FIG. 3 illustrates a tire footprint shape for an aircraft radial tire under rated pressure and rated load.

FIGS. 4-19 illustrate nonlimiting examples of belt reinforcing structures that may be arranged between a carcass and a tread in an aircraft radial tire of the present invention.

FIGS. 20A, 21A, and 22A illustrate a tire footprint shape for each of the three example aircraft radial tires under rated pressure and rated load.

FIGS. 20B, 21B, and 22B illustrate tread wear patterns corresponding to the tire footprint shape illustrated in FIGS. 20A, 21A, and 22A, respectively.

DEFINITIONS

The following definitions are applicable to the present invention.

"Axial" and "axially" mean lines or directions that are parallel to the axis of rotation of the tire.

"Axially inward" means in an axial direction toward the equatorial plane.

"Axially outward" means in an axial direction away from the equatorial plane.

"Bead" or "bead core" generally means that part of the tire comprising an annular tensile member of radially inner beads that are associated with holding the tire to the rim.

"Carcass" means the tire structure apart from the belt structure, tread, under tread over the plies, but including the beads.

"Circumferential" means lines or directions extending along the perimeter of the surface of the annular tread perpendicular to the axial direction.

"Equatorial plane," "equatorial plane (EP)," or "equatorial centerplane" means the plane perpendicular to the axis of rotation of the tire and passing through the center of the tire tread.

"Groove" means an elongated void area in a tread that may extend in a circumferential, lateral or angled manner about the tread in a straight, curved, or zigzag configuration. Circumferentially and laterally extending grooves sometimes have common portions. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves have a substantially reduced depth, as compared to wide circumferential grooves which is the interconnect, they are regarded as forming "stiffener elements" tending to maintain a rib-like character in tread region involved.

"Inner" means toward the inside of the tire.

"Lateral" and "laterally" are used to indicate axial directions across the tread of the tire.

"Lateral edges" mean a line tangent to the axially outermost tread contact patch or footprint as measured under normal load and tire inflation, the lines being parallel to the equatorial centerplane.

"Monofilament" means a cord having only one filament.

"Outer" means toward the outside of the tire.

"Ply" means a layer of rubber-coated parallel cords.

"Radial" and "radially" are used to mean directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Shoulder" means the upper portion of sidewall just below the tread edge.

"Tread" means a molded rubber component which includes that portion of the tire that comes into contact with the road when the tire is normally inflated and under normal load. The tread has a depth conventionally measured from the tread outer surface to the bottom of the deepest groove of the tire.

"Turnup ply" and "turnup portion" refers to a portion of a carcass ply that wraps around one bead only.

"Zigzag belt reinforcing structure" means a belt structure formed of at least two layers of cords interwoven together wherein preferably a ribbon of parallel cords having 1 to 20 cords in each ribbon are laid up in an alternating pattern extending at an angle typically between 2° and 45° or 5° and 40° between lateral edges of the belt, and more preferably between 3° and 11°, and most preferably between 5° and 11° degrees.

DESCRIPTION OF PREFERRED EMBODIMEMTS OF THE INVENTION

The present invention relates preferably to aircraft radial tires with tread configurations that may reduce uneven tread wear and, consequently, may increase the useful life of the tires.

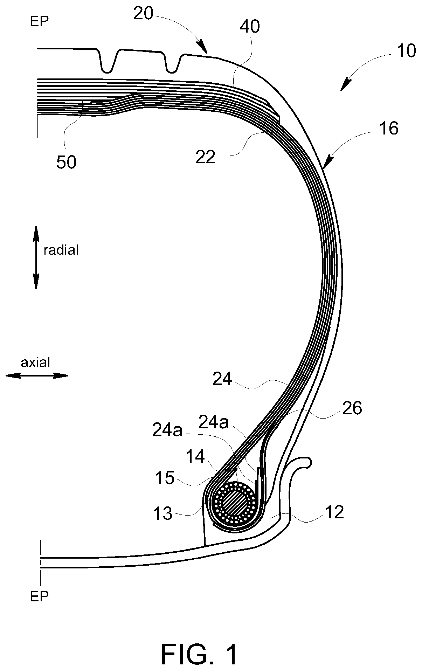

FIG. 1 illustrates a cross-sectional view of one half of an aircraft radial tire 10 (also referred to herein as an aircraft tire or a pneumatic tire or a tire) according to at least one embodiment of the present invention. The pneumatic tire 10 is symmetrical about the equatorial plane EP so that only one half is illustrated. As shown, the pneumatic tire 10 may comprises a pair of bead portions 12 each containing a bead 14 embedded therein. An example of a bead suitable for use in a pneumatic tire 10 of the present invention is shown in U.S. Pat. No. 6,571,847. The bead 14 is preferably formed by a plurality of sheath wires 15 (e.g., steel sheath wires) surrounding a central core 13 that is a lightweight metal alloy material having a specific weight less than steel metal (e.g., aluminum, aluminum alloy, or other lightweight alloy such as magnesium, titanium, or any metal alloy having a weight less than steel).

The pneumatic tire 10 further comprises a sidewall portion 16 extending substantially outward from each of the bead portions 12 in the radial direction of the pneumatic tire 10, and a tread 20 extending between the radially outer ends of the sidewall portions 16. Furthermore, the pneumatic tire 10 is reinforced with a carcass 22 toroidally extending from one of the bead portions 12 to the other bead portion 12. The carcass 22 comprises a plurality of plies include inner carcass plies 24 and outer carcass plies 26, preferably oriented in the radial direction. Among these carcass plies, typically two (or more) inner carcass plies 24 are wound around the bead 14 from inside of the pneumatic tire 10 toward outside thereof to form turnup portions 24a, while typically one (or more) outer carcass ply 26 are extended downward to the bead 14 along the outside, in the radial direction, of the turnup portion 24a of the inner carcass plies 24. Each of these carcass plies 24, 26 may comprise any suitable cord, typically nylon cords such as nylon-6,6 cords extending substantially perpendicular to the equatorial plane EP of the pneumatic tire 10 (i.e., extending in the radial direction of the tire 10). Preferably, the nylon cords have an 1890 denier/2/2 or 1890 denier/3 construction. One or more of the carcass plies 24, 26 may also comprise an aramid and nylon cord structure, for example, a hybrid cord, a high energy cord or a merged cord. Examples of suitable cords are described in U.S. Pat. No. 4,893,665, U.S. Pat. No. 4,155,394 or U.S. Pat. No. 6,799,618.

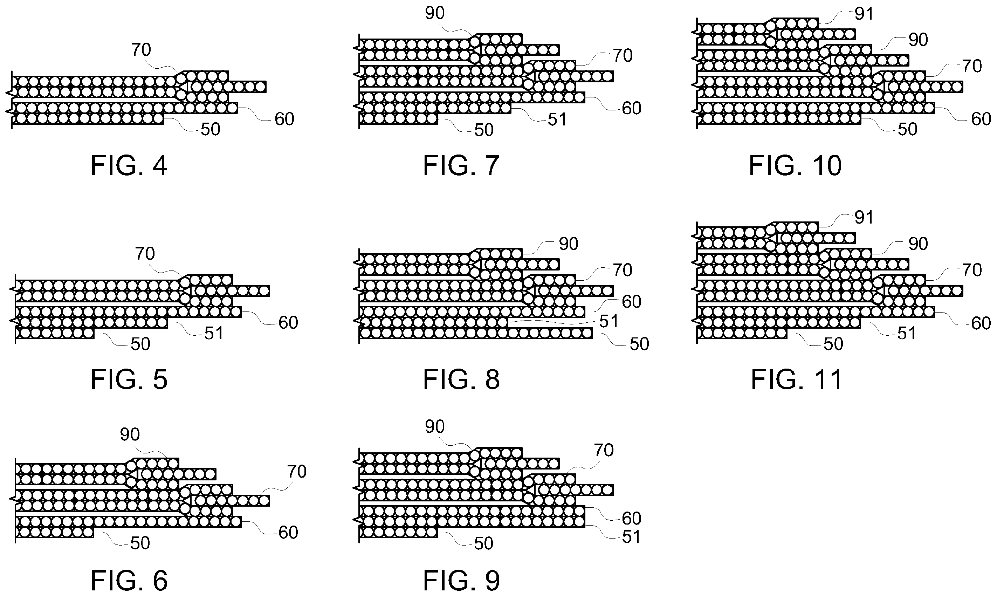

The pneumatic tire 10 further comprises a belt reinforcing structure 40 arranged between the carcass 22 and the tread 20. Several nonlimiting examples of suitable belt reinforcing structures 40 are illustrated in FIGS. 4-19 and described further herein.

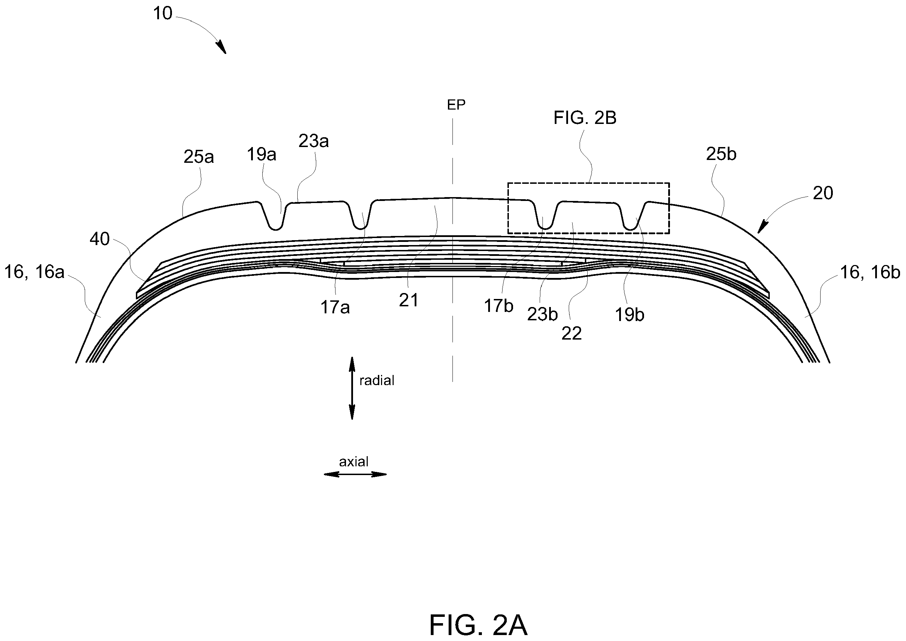

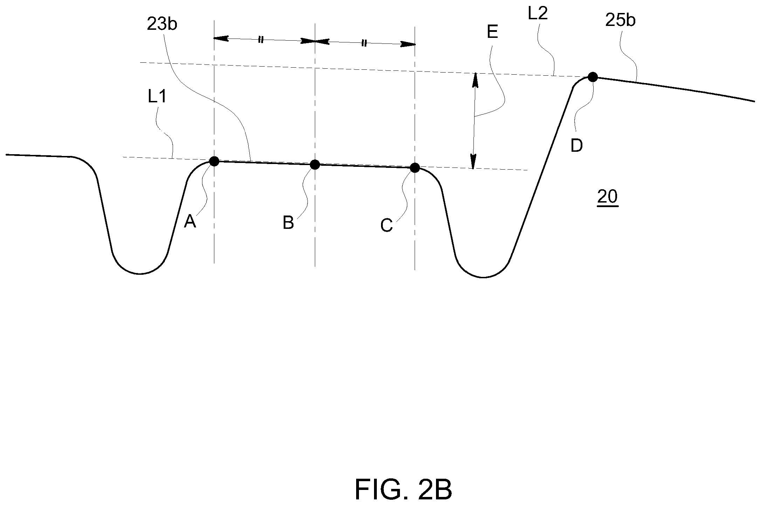

FIG. 2A, with continued reference to FIG. 1, illustrates a cross-sectional view of the pneumatic tire 10 showing the full portion of the tread 20. FIG. 2B illustrates an extract from FIG. 2A.

The tread 20 may include four main grooves 17a, 17b, 19a, 19b extending circumferentially continuously around the pneumatic tire 10 defining five ribs 21, 23a, 23b, 25a, 25b. While FIG. 2 illustrates four main grooves 17a, 17b, 19a, 19b and five ribs 21, 23a, 23b, 25a, 25b any number of main grooves and ribs may be included in an aviation pneumatic tire of the present invention.

The four main grooves 17a, 17b, 19a, 19b include two axially inward main grooves 17a, 17b and two axially outward main grooves 19a, 19b. The two axially inward main grooves 17a, 17b are disposed on each side of a central rib 21; thereby defining the central rib 21. A pair of intermediate ribs 23a, 23b are axially outward from the central rib 21. Each intermediate rib 23a, 23b is defined by an axially inward main groove 17a, 17b and an axially outward main groove 19a, 19b. Specifically, the intermediate rib 23a is defined by the axially inward main groove 17a and the axially outward main groove 19a, and the intermediate rib 23b is defined by the axially inward main groove 17b and the axially outward main groove 19b. Further, a pair of shoulder ribs 25a, 25b are each defined by an axially outward main groove 19a, 19b and a corresponding shoulder 16a, 16b of the pneumatic tire 10. Specifically, the shoulder rib 25a is defined by the axially outward main groove 19a and the shoulder 16a, and the shoulder rib 25b is defined by the axially outward main groove 19b and the shoulder 16b.

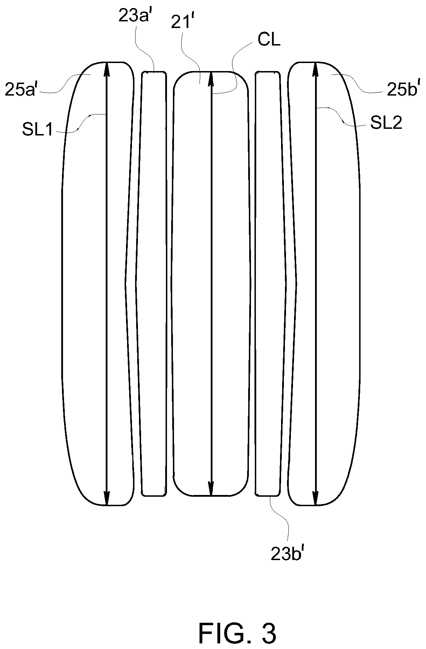

The pneumatic tires of the present invention have a tread configuration that may reduce uneven wear thereof. Generally, the tread of the pneumatic tires of the present invention may have (i) a convex shape in the radial direction at low to full inflation due to raised axially outermost ribs (i.e., the two ribs defined by a main groove and a lateral edge) (e.g., shoulder ribs 25a, 25b of FIG. 2A) and (ii) a concave footprint shape when inflated and under pressure. FIGS. 2A-2B illustrates shoulder ribs 25a, 25b of the pneumatic tire 10 being raised at 10% to 100% of rated pressure and no load, and FIG. 3 illustrates a footprint shape (specifically, a concave footprint shape) of the pneumatic tire 10 at rated pressure and rated load.

Referring to FIG. 2A, the tread configuration may be such that when the pneumatic tire 10 is at 10% to 100% of rated pressure and no load the shoulder ribs 25a, 25b (the two axially outermost ribs) are raised in relation to their respective shoulder rib 25a, 25b (their next nearest rib located axially inward therefrom). As illustrated, the shoulder rib 25a is raised in relation to the intermediate rib 23a, and the shoulder rib 25b is raised in relation to the intermediate rib 23b.

The amount an axially outermost rib (e.g., a shoulder rib 25a, 25b) is radially raised in relation to the next nearest rib (e.g., the respective shoulder rib 25a, 25b) located axially inward of said outermost rib may be quantified by a distance of a gap, which is illustrated as gap E in FIG. 2B. The gap E is the distance between parallel lines L1 and L2. The line L1 is defined as the line extending between points A and C. Points A and C are located an equidistance along the next nearest rib (e.g., illustrated as the intermediate rib 23b) located axially inward of the axially outermost rib (e.g., illustrated as the shoulder rib 25b) from a midpoint B of said next nearest rib. Points A and C are on the rib surface and not in the adjacent main grooves. Points A and C may be 0.5 cm to 5 cm from the midpoint B, the value of which depend on the lateral width of the rib. The line L2 is defined as a line parallel to the line L1 and passing through point D, which is at the most radially outward point along the surface of the axially outermost rib (e.g., illustrated as the shoulder rib 25b). The gap E may be 1 mm to 7 mm or 1 mm to 5 mm or 3 mm to 7 mm.

The raised shoulder rib of the aircraft tires (e.g., pneumatic tire 10) described herein may provide more even wear across the tread when the aircraft tire is under rated pressure and rated load.

Aircraft tires (e.g., pneumatic tire 10) typically have a rated pressure of 100 psi to 350 psi (1 psi = 6.90 kPa) and have a rated load of about 2,000 lbs to about 75,000 lbs (1 lbs = 0.454 kg), which may depend on the application of size and weight of the aircraft. For example, aircraft tires with smaller dimension and carcasses and/or belt reinforcing structures with fewer plies may have a lower rated pressure and/or a lower rated load.

FIG. 3, with continued reference to FIGS. 1, 2A, and 2B, illustrates a tire footprint shape of the pneumatic tire 10 under rated pressure and rated load. The tire footprint illustrated is an outline of the ground contact of each of the five ribs 21, 23a, 23b, 25a, 25b which correspond respectively to a footprint 21' of the central rib 21, a footprint 23a' of the intermediate rib 23a, a footprint 23b' of the intermediate rib 23b, a footprint 25a' of the shoulder rib 25a, and a footprint 25b' of the shoulder rib 25b. Preferably, the pneumatic tire 10 has a concave footprint shape under rated pressure and rated load. The footprint shape may be characterized by a footprint shape factor (FSF).

The FSF is calculated according to:

$$CL = FSF * (\frac{SL1 + SL2}{2})$$

where CL is a maximum length of a footprint of the central rib (e.g., the footprint 21' of the central rib 21), SL1 is a maximum length of a footprint of a first axially outermost rib (e.g., the footprint 25a' of the first shoulder rib 25a), and is a maximum length of a footprint of a second axially outermost rib (e.g., the footprint 25b' of the second shoulder rib 25b).

The pneumatic tire under rated pressure and rated load may have a footprint shape factor (FSF) of 0.80 to 0.98 (or 0.80 to 0.97, or 0.90 to 0.98, or 0.90 to 0.97, or 0.93 to 0.98, or 0.93 to 0.97, or 0.94 to 0.98, or 0.94 to 0.97). The FSF can be changed to square (FSF=1) or concave (or butterfly, FSF<1.0) or convex (FSF>1.0) by adjusting the values of SL1 & SL2 and CL under rated pressure and rated load. The FSF applies to aircraft tires of the present invention with a number of ribs other than five. For an even number of ribs, an average of the maximum length of a footprint for the two central ribs may be used for CL.

FIGS. 4-19, with continued reference to FIG. 1, illustrate examples of suitable belt reinforcing structures 40 that may be arranged between the carcass 22 and the tread 20. As described in FIG. 1, the pneumatic tire 10 is symmetrical about the equatorial plane EP so that only one half of each the belt reinforcing structures 40 is illustrated in FIGS. 4-19.

In each of the illustrated belt reinforcing structures 40 of FIGS. 4-19, the belt reinforcing structures 40 comprise a plurality of belt layers that include at least one spiral belt layer and at least one zigzag belt layer, each of the at least one spiral belt layers having cords arranged at an angle of 5° or less (or 3° or less) with respect to the equatorial plane EP of the pneumatic tire 10 and each of the at least one zigzag belt layers having cords arranged at an angle of 5° to 40° (or 6° to 30°) with respect to the equatorial plane EP and extending in alternation to turnaround points at each lateral edge of the belt reinforcing structure 40. Each of the plurality of belt layers may be formed of a rubberized strip of two or more cords made by spirally or helically winding the cords at an angle of plus or minus 5° or less relative to the circumferential direction.

The cords of any of the above described spiral or zigzag belt layers may comprise nylon, nylon 6,6, aramid, or combinations thereof, including merged, hybrid, or high energy constructions known to those skilled in the art. One example of a suitable cord construction for the belt cords (or carcass cords or both) may comprise a composite of aramid and nylon, containing two cords of a polyamide (aramid) with construction of 3300 dtex with a 6.7 twist, and one nylon or nylon 6/6 cord having a construction of 1880 dtex, with a 4.5 twist. The overall merged cable twist is 6.7. Preferably, the belt cords have an elongation at break greater than about 8% and less than about 26% and a break strength greater than about 400N. More preferably, the belt cords have an elongation at break in the range of about 9% to about 25%. It is additionally preferred that the ply cords have a greater elongation at break than the belt cords elongation at break. The cord properties such as percent elongation at break, linear density and tensile strength are determined from cord samples taken after being dipped but prior to vulcanization of the tire.

The belt reinforcing structures 40 may comprise a first belt layer 50 that in FIG. 1 would be located radially outward of the carcass 22. The first belt layer 50 is preferably the belt layer closest to the carcass 22. The first belt layer 50 may be a spiral belt layer. The first belt layer 50 may have a belt width in the axial direction that is less than the belt width of a widest belt layer in the belt reinforcing structure 40. The first belt layer 50 may have a width in the range of about 13% to about 100% of a rim width (width between flanges), and more particularly in the range of about 20% to about 70% of the rim width (width between flanges), and most particularly in the range of about 30% to about 42% of the rim width (width between flanges).

The configuration of the plurality of belts may be based, at least in part, on the sized and rated conditions for the pneumatic tire. In preferred embodiments, a zigzag belt layer may be the widest layer of the plurality of belts, for example, as illustrated in FIGS. 4-9.

FIG. 4 illustrates a plurality of belt layers that include the following belt layers that are layered in order according to a radially outward direction: the first belt layer 50, a second belt layer 60 as a spiral belt layer, and a third belt layer 70 as a zigzag belt layer. The first belt layer 50 is the narrowest belt layer, and the third belt layer 70 is the widest belt layer. The width of the second belt layer is between the widths of the first and third belt layers 50, 70.

FIG. 5 illustrates a plurality of belt layers that include the following belt layers that are layered in order according to a radially outward direction: the first belt layer 50, a second belt layer 51 as a spiral belt layer, a third belt layer 60 as a spiral belt layer, and a fourth belt layer 70 as a zigzag belt layer. From narrowest to widest widths along the axial direction, the plurality of belt layers are illustrated as the first belt layer 50, the second belt layer 51, the third belt layer 60, and the fourth belt layer 70.

FIG. 6 illustrates a plurality of belt layers that include the following belt layers that are layered in order according to a radially outward direction: the first belt layer 50, a second belt layer 60 as a spiral belt layer, a third belt layer 70 as a zigzag belt layer, and a fourth belt layer 90 as a zigzag belt layer. From narrowest to widest widths along the axial direction, the plurality of belt layers are illustrated as the first belt layer 50, the fourth belt layer 90, the second belt layer 60, and the third belt layer 70.

FIG. 7 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the first belt layer 50, second belt layer 51, the fifth belt layer 90, the third belt layer 60, and the fourth belt layer 70.

FIG. 8 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the second belt layer 51, the fifth belt layer 90, the first belt layer 50 and the third belt layer 60 of equal width, and the fourth belt layer 70.

FIG. 9 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the first belt layer 50, the fifth belt layer 90, the second belt layer 51 and the third belt layer 60 of equal width, and the fourth belt layer 70.

FIG. 10 illustrates a plurality of belt layers that include the following belt layers that are layered in order according to a radially outward direction: the first belt layer 50, a second belt layer 60 as a spiral belt layer, a third belt layer 70 as a zigzag belt layer, a fourth belt layer 90 as a zigzag belt layer, and a fifth belt layer 91 as a zigzag belt layer. From narrowest to widest widths along the axial direction, the plurality of belt layers are illustrated as the first belt layer 50 and the fifth belt layer 91 of equal width, the fourth belt layer 90, the second belt layer 60, and the third belt layer 70.

FIG. **11** illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, a fifth belt layer 90 as a zigzag belt layer, and a sixth belt layer 91 as a zigzag belt layer. From narrowest to widest widths along the axial direction, the plurality of belt layers are illustrated as the first belt layer 50, the second belt layer 51 and the fifth belt layer 91 of equal width, the fifth belt layer 90, the third belt layer 60, and the fourth belt layer 70.

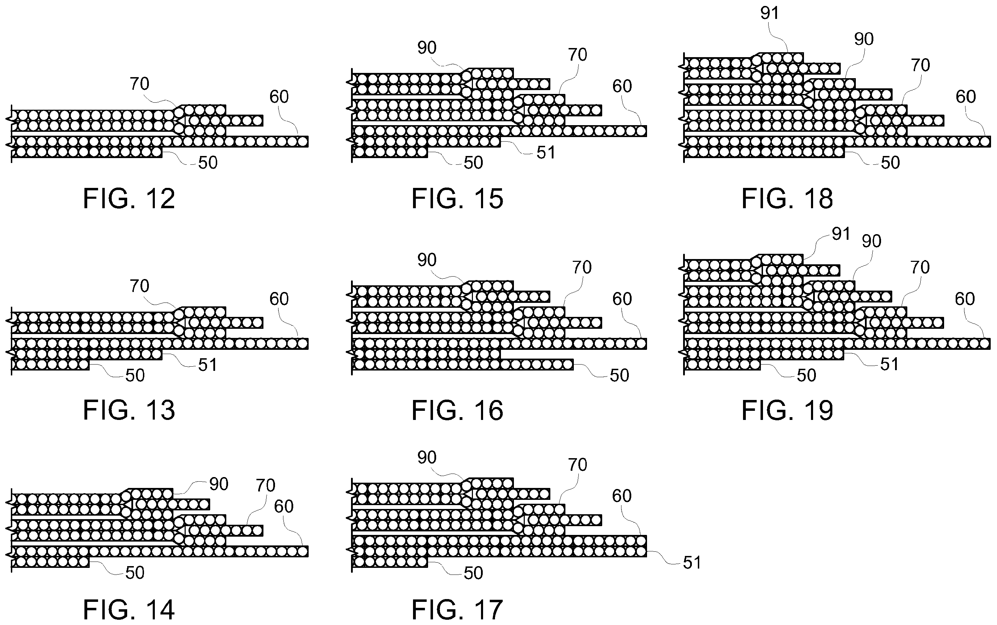

FIG. 12 illustrates a plurality of belt layers that include the following belt layers that are layered in order according to a radially outward direction: the first belt layer 50, a second belt layer 60 as a spiral belt layer, and a third belt layer 70 as a zigzag belt layer. From narrowest to widest widths along the axial direction, the plurality of belt layers are illustrated as the first belt layer 50, the third belt layer 70, and the second belt layer 60.

FIG. 13 illustrates a plurality of belt layers that include the following belt layers that are layered in order according to a radially outward direction: the first belt layer 50, a second belt layer 51 as a spiral belt layer, a third belt layer 60 as a spiral belt layer, and a fourth belt layer 70 as a zigzag belt layer. From narrowest to widest widths along the axial direction, the plurality of belt layers are illustrated as the first belt layer 50, the second belt layer 51, the fourth belt layer 70, and the third belt layer 60.

FIG. 14 illustrates a plurality of belt layers that include the following belt layers that are layered in order according to a radially outward direction: the first belt layer 50, a second belt layer 60 as a spiral belt layer, a third belt layer 70 as a zigzag belt layer, and a fourth belt layer 90 as a zigzag belt layer. From narrowest to widest widths along the axial direction, the plurality of belt layers are illustrated as the first belt layer 50, the fourth belt layer 90, the third belt layer 70, and the second belt layer 60.

FIG. 15 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the first belt layer 50, the second belt layer 51, the fifth belt layer 90, the fourth belt layer 70, and the third belt layer 60.

FIG. 16 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the second belt layer 51, the fifth belt layer 90, the first belt layer 50, the fourth belt layer 70, and the third belt layer 60.

FIG. 17 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, and a fifth belt layer 90 as a zigzag belt layer. From narrowest to widest widths along the axial direction, the plurality of belt layers are illustrated as the first belt layer 50, the fifth belt layer 90, the fourth belt layer 70, and of equal width the second belt layer 51 and the third belt layer 60.

FIG. 18 illustrates a plurality of belt layers that include the following belt layers that are layered in order according to a radially outward direction: the first belt layer 50, a second belt layer 60 as a spiral belt layer, a third belt layer 70 as a zigzag belt layer, a fourth belt layer 90 as a zigzag belt layer, and a fifth belt layer 91 as a zigzag belt layer. From narrowest to widest widths along the axial direction, the plurality of belt layers are illustrated as the first belt layer 50 and the fifth belt layer 91 of equal width, the fourth belt layer 90, the third belt layer 70, and the second belt layer 60.

FIG. 19 illustrates a plurality of belt layers that include the following belt layers that are layered in order according to a radially outward direction: the first belt layer 50, a second belt layer 51 as a spiral belt layer, a third belt layer 60 as a spiral belt layer, a fourth belt layer 70 as a zigzag belt layer, a fifth belt layer 90 as a zigzag belt layer, and a sixth belt layer 91 as a zigzag belt layer. From narrowest to widest widths along the axial direction, the plurality of belt layers are illustrated as the first belt layer 50, second belt layer 51 and sixth fifth belt layer 91 of equal width, the fifth belt layer 90, the fourth belt layer 70, and the third belt layer 60.

In any of the above described embodiments, the cords may be preferably continuously wound from one belt layer to the next.

The composition of the various components of the aircraft tires described herein may be traditional materials used in the construction of aircraft tires.

Examples of rubbers suitable for use in the tread, belt reinforcing structure, carcass, and other portions of the aircraft tire traditionally made of or containing rubber may include, but are not limited to, neoprene (polychloroprene), polybutadiene (including cis-1,4-polybutadiene), polyisoprene (including cis-1,4-polyisoprene) (natural or synthetic), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM) (e.g., ethylene/propylene/-dicyclopentadiene terpolymers), alkoxy-silyl end functionalized solution polymerized polymers (SBR, PBR, IBR and SIBR), silicon-coupled, tin-coupled star-branched polymers, the like, and any combination thereof.

The foregoing rubbers may also contain conventional rubber compounding ingredients including processing oil, accelerators, conventional sulfur curing agents, pigments, carbon black, zinc oxide, stearic acid, tackifying resin, and plasticizer.

To facilitate a better understanding of the embodiments of the present invention, the following examples of preferred or representative embodiments are given.

<u>EXAMPLES</u>

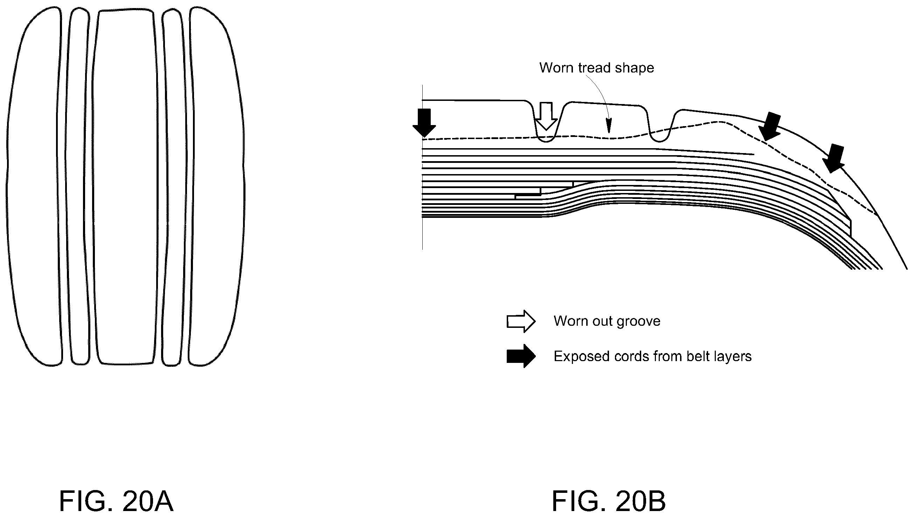

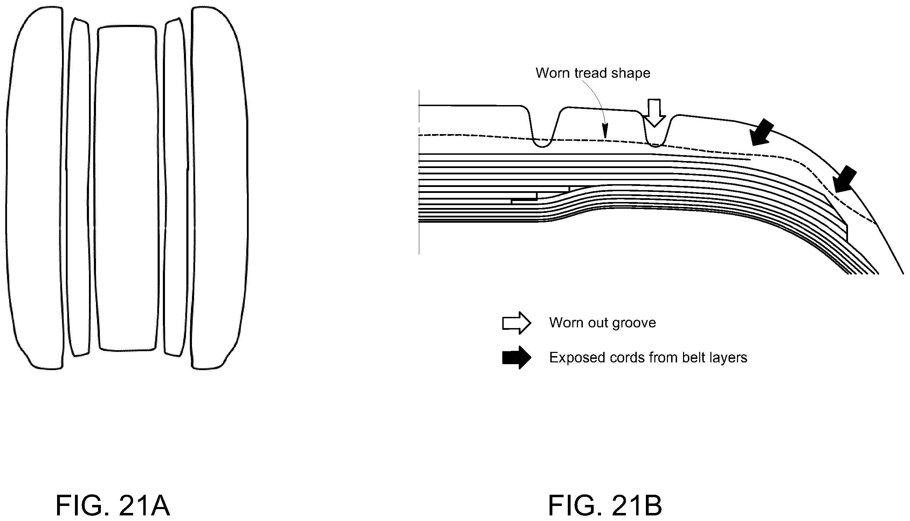

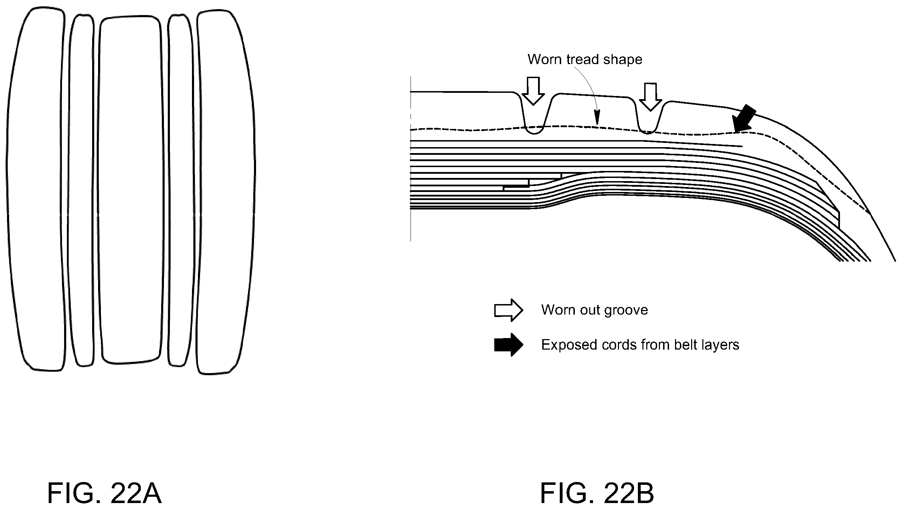

The wear performance for three pneumatic aircraft tires with different tread configurations were tested. The tread configuration for Tire 1 (comparative tire) does not meet either of the conditions of (i) a raised shoulder rib when at 10% to 100% of rated pressure and no load or (ii) a FSF of 0.80 to 0.98 when at rated pressure and rated load. The tread configurations for Tire 2 and Tire 3 (inventive tires) do meet said condition. The footprint shape factor of each tire was measured before the tread wear performance and is reported in Table 1. A tire footprint shape of each of the three tires under rated pressure and rated load is illustrated in FIGS. 20A, 21A, and 22A. Comparing these figures, respectively, Tire 1 has a square or flat shape, Tire 2 has a very concave footprint shape, and Tire 3 has an intermediate concave footprint shape.

The three tires were tested for tread wear performance measured under in door drum testing conditions, which is a taxiing test under lower speed like a 10 to 12 mph (1 mph = 1.609 km/h) with 70 to 80% rated load free rolling condition. After 4000 miles (1 mile = 1.609 km) running, the treads were inspected to compare tread loss and predict entire tread wear profile in service. The tread wear performance values are provided in Table 1. The predicted tread wear profile for each tire is illustrated in FIGS. 20B, 21B, and 22B. Tire 1 has uneven wear focused near the equatorial plane and axially outward edges of the tread. Tire 2 has more even wear than Tire 1 but is focused at the axially outward main groove and axial edges of the tread. Tire 3 has the most even wear showing similar wear at both the axially inward and outward main grooves while also exposing cords of the belt layers. That is, axially across the tread of Tire 3 similar wear is shown.

TABLE 1

|  | Footprint Shape Factor | Footprint Shape | Tread Wear Performance (index) | Tread Wear Pattern |
|---|---|---|---|---|
| Tire 1 | 1.0 | FIG. 20A | 100 | FIG. 20B |
| Tire 2 | 0.92 | FIG. 21A | 110 | FIG. 21B |
| Tire 3 | 0.96 | FIG. 22A | 125-130 | FIG. 22B |

**Claims**

1. A pneumatic tire comprising a carcass (22) and a belt structure (40), the belt structure (40) comprising a plurality of belt layers that include at least one spiral belt layer (60) and at least one zigzag belt layer (70), each of the at least one spiral belt layers (60) having cords arranged at an angle of 5° or less with respect to an equatorial plane of the pneumatic tire (10) and each of the at least one zigzag belt layers (70) having cords arranged at an angle in a range of from of 2° to 40°, alternatively from 5° to 30°, with respect to the equatorial plane of the pneumatic tire (10) and extending in alternation to turnaround points at each lateral edge of the belt structure (40), wherein a first belt layer of the plurality of belt layers located radially outward of the carcass (22) is one of the at least one spiral belt layers (60), and wherein the first belt layer has an axial width less than the axially widest belt layer of the plurality of belt layers, wherein the pneumatic tire (10) further comprises a tread (20) comprising two or more main grooves (17a, 19a, 17b, 19b) extending circumferentially continuously around the pneumatic tire (10) and defining a plurality of ribs (25a, 23a, 21, 23b, 25b) that include an axially outermost rib (25a, 25b) on each lateral side of the tread (20), **characterized in that,** at 10% to 100% of the rated inflation pressure of the pneumatic tire (10) and no load, each of the two axially outermost ribs (25a, 25b) is radially raised in relation to a respective next nearest rib (23a, 23b) located axially inward of the respective axially outermost rib (25a, 25b).

2. The pneumatic tire of claim 1, wherein the two or more main grooves (17a, 19a, 17b, 19b) are four main grooves (17a, 19a, 17b, 19b) and the plurality of ribs (25a, 23a, 21, 23b, 25b) is five ribs (25a, 23a, 21, 23b, 25b), wherein the two axially outermost ribs (25a, 25b) are a pair of shoulder ribs, wherein the four main grooves (17a, 19a, 17b, 19b) and the five ribs (25a, 23a, 21, 23b, 25b) include two axially inward main grooves (17a, 17b) disposed on each side of a central rib (21), two axially outward main grooves (19a, 19b), a pair of intermediate ribs (23a, 23b) each defined by adjacent axially inward and axially outward main grooves (17a, 19a, 17b, 19b), and wherein said shoulder ribs (25a, 25b) are each defined by a axially outward main groove (19a, 19b) and corresponding shoulder (16a, 16b) of the pneumatic tire (10).

3. The pneumatic tire of at least one of the previous claims, wherein each of the two axially outermost ribs (25a, 25b) are radially raised by an amount or a gap in a range of from 1 mm to 7 mm or in a range of from 3 to 7 mm in relation to the respective next nearest rib (23a, 23b) located axially inward of the respective axially outermost rib (25a, 25b).

4. The pneumatic tire of at least one of the previous claims, wherein a second belt layer of the belt reinforcing structure located radially outward of the first belt layer is one of the at least one zigzag belt layers (70), and wherein the cords of the second belt layer are arranged at an angle in a range of from 6° to 30° with respect to the equatorial plane.

5. The pneumatic tire of at least one of the previous claims, wherein the cords of the second belt layer comprise a polyamide and/or an aromatic polyamide; and/or wherein the cords of the first belt layer comprise a polyamide and/or an aromatic polyamide.

6. The pneumatic tire of at least one of the previous claims, wherein the cords of the first belt layer are arranged at an angle of 3° or less with respect to an equatorial plane.

7. The pneumatic tire of at least one of the previous claims 1 to 3, wherein a second belt layer of the belt structure (40) located radially outward of the first belt layer is one of the at least one spiral belt layers.

8. The pneumatic tire of at least one of the previous claims, wherein a third belt layer of the belt structure (40) located radially outward of the second belt layer is one of the at least one zigzag belt layers.

9. The pneumatic tire of at least one of the previous claims, wherein the first belt is the axially narrowest belt layer of the plurality of belt layers.

10. The pneumatic tire of at least one of the previous claims further comprising a bead (14) formed by a plurality of sheath wires (15) surrounding a central core (13), wherein the central core (13) is a lightweight metal or metal alloy material having a specific weight less than steel.

11. The pneumatic tire of at least one of the previous claims, wherein the carcass (22) comprises a plurality of carcass plies (26) wound around the bead (14), and wherein cords of the plurality of carcass plies (26) comprise a polyamide and/or an aromatic polyamide.

12. The pneumatic tire of at least one of the previous claims, wherein the pneumatic tire (10) is an aircraft tire.

**Patentansprüche**

1. Luftreifen, welcher eine Karkasse (22) und eine Gürtelstruktur (40) umfasst; wobei die Gürtelstruktur (40) eine Anzahl von Gürtelschichten umfasst, welche zumindest eine spiralförmige Gürtelschicht (60) und zumindest eine zickzackförmige Gürtelschicht (70) enthalten; wobei jeder Gürtel unter der zumindest einen spiralförmigen Gürtelschicht (60) Korde aufweist, die derart angebracht sind, dass sie einen Winkel von 5° oder weniger in Bezug auf eine Äquatorialebene des Luftreifens (10) bilden, und jeder Gürtel unter der zumindest einen zickzackförmigen Gürtelschicht (70) Korde aufweist, die derart angebracht sind, dass sie einen Winkel bilden, der in einem Bereich von 2° bis 40°, in der Variante in einem Bereich von 5° bis 30° in Bezug auf die Äquatorialebene des Luftreifens (10) liegt, und die sich abwechselnd zu Umkehrpunkten an jeder Seitenkante der Gürtelstruktur (40) erstrecken; wobei eine erste Gürtelschicht unter den mehreren Gürtelschichten, die in der radialen Richtung außerhalb der Karkasse (22) liegen, eine Gürtelschicht unter der zumindest einen spiralförmigen Gürtelschicht (60) darstellt; und wobei die erste Gürtelschicht eine axiale Breite aufweist, die geringer ist als die in der axialen Richtung breiteste Gürtelschicht unter den genannten mehreren Gürtelschichten; wobei der Luftreifen (10) ferner eine Lauffläche (20) umfasst, welche zwei oder mehr Hauptrillen (17a, 19a, 17b, 19b) umfasst, die sich in der umlaufenden Richtung kontinuierlich um den Luftreifen (10) herum erstrecken und eine Anzahl von Rippen (25a, 23a, 21, 23b, 25b) definieren, die eine in der axialen Richtung am weitesten außen liegende Rippe enthalten, die auf jeder seitlichen Seite der Lauffläche (20) liegt; **dadurch gekennzeichnet, dass** unter Bedingungen von 10% bis 100% des Nennfülldrucks des Luftreifens (10) und ohne Belastung die Höhe jeder Rippe unter den zwei am weitesten außen liegenden Rippen (25a, 25b) in der radialen Richtung größer ist als die einer nächstgelegenen jeweiligen Rippe (23a, 23b), die in der axialen Richtung innerhalb der jeweiligen in der axialen Richtung am weitesten außen liegenden Rippe (25a, 25b) angebracht ist.

2. Luftreifen nach Anspruch 1, wobei die mindestens zwei oder mehr Hauptrillen (17a, 19a, 17b, 19b) vier Rillen (17a, 19a, 17b, 19b) darstellen und die mehreren Rippen (25a, 23a, 21, 23b, 25b) fünf Rippen (25a, 23a, 21, 23b, 25b) darstellen; wobei die zwei in der axialen Richtung am weitesten außen liegenden Rippen (25a, 25b) ein Paar Schulterrippen darstellen; wobei die vier Hauptrillen (17a, 19a, 17b, 19b) und die fünf Rippen (25a, 23a, 21, 23b, 25b) zwei in der axialen Richtung innere Hauptrillen (17a, 17b), die auf jeder Seite einer zentralen Rippe (21) angebracht sind, zwei in der axialen Richtung äußere Hauptrillen (19a, 19b), ein Paar Zwischenrippen (23a, 23b), die jeweils durch angrenzende, in der axialen Richtung innere und in der axialen Richtung äußere Hauptrillen (17a, 19a, 17b, 19b) umfassen; und wobei die oben genannten Schulterrippen (25a, 25b) jeweils durch eine in der axialen Richtung äußere Hauptrille (19a, 19b) und durch eine entsprechende Schulter (16a, 16b) des Luftreifens (10) definiert sind.

3. Luftreifen nach zumindest einem der vorhergehenden Ansprüche, wobei die Höhe jeder Rippe unter den zwei in der axialen Richtung am weitesten außen liegenden Rippen (25a, 25b) um einen Wert oder Freiraum von 1 mm bis 7 mm oder innerhalb eines Bereichs von 3 bis 7 mm größer ist als die der nächstgelegenen jeweiligen Rippe (23a, 23b), die in der axialen Richtung innerhalb der in der axialen Richtung am weitesten außen liegenden jeweiligen Rippe (25a, 25b) angebracht ist.

4. Luftreifen nach zumindest einem der vorhergehenden Ansprüche, wobei eine zweite Gürtelschicht der Gürtelverstärkungsstruktur, die in der radialen Richtung außerhalb der ersten Gürtelschicht liegt, eine Gürtelschicht darstellt, die aus der zumindest einen zickzackförmigen Gürtelschicht (70) ausgewählt ist; und wobei die Korde der zweiten Gürtelschicht unter Bildung eines Winkels angebracht sind, der in einem Bereich von 10° bis 30° bezüglich der Äquatorialebene liegt.

5. Luftreifen nach zumindest einem der vorhergehenden Ansprüche, wobei die Korde der zweiten Gürtelschicht ein Polyamid und/oder ein aromatisches Polyamid umfassen; und/oder wobei die Korde der ersten Gürtelschicht ein Polyamid und/oder ein aromatisches Polyamid umfassen.

6. Luftreifen nach zumindest einem der vorhergehenden Ansprüche, wobei die Korde der ersten Schicht des Gürtels unter Bildung eines Winkels von 3° oder weniger in Bezug auf eine Äquatorialebene angebracht sind.

7. Luftreifen nach zumindest einem der vorhergehenden Ansprüche 1 bis 3, wobei eine zweite Gürtelschicht der Gürtelstruktur (40), die in der radialen Richtung außerhalb der ersten Gürtelschicht angebracht ist, eine Gürtelschicht darstellt, die aus der zumindest einen spiralförmigen Gürtelschicht ausgewählt ist.

8. Luftreifen nach zumindest einem der vorhergehenden Ansprüche, wobei eine dritte Gürtelschicht der Gürtelstruktur (40), die sich über und in der radialen Richtung außerhalb der zweiten Gürtelschicht befindet, eine Gürtelschicht darstellt, die aus der zumindest einen zickzackförmigen Gürtelschicht ausgewählt ist.

9. Luftreifen nach zumindest einem der vorhergehenden Ansprüche, wobei der erste Gürtel die in der axialen Richtung schmalste Gürtelschicht unter den oben genannten mehreren Gürtelschichten darstellt.

10. Luftreifen nach zumindest einem der vorhergehenden Ansprüche, welcher ferner einen Wulst (14) umfasst, der aus einer Anzahl von Kabeln (15) gebildet ist, die einen durch einen Mantel umgebenen Kern (13) umfassen; wobei der Kern (13) ein leichtes Material auf der Basis eines Metalls oder einer Metalllegierung umfasst, welches ein spezifisches Gewicht aufweist, das geringer ist als das von Stahl.

11. Luftreifen nach zumindest einem der vorhergehenden Ansprüche, wobei die Karkasse (22) eine Anzahl von Karkassenlagen (26) umfasst, die um den Wulst (14) gewickelt sind; und wobei Korde der mehreren Karkassenlagen (26) ein Polyamid und/oder ein aromatisches Polyamid umfassen.

12. Luftreifen nach zumindest einem der vorhergehenden Ansprüche, wobei der Luftreifen (10) ein Luftreifen für ein Flugzeug ist.


**Revendications**

1. Bandage pneumatique qui comprend une carcasse (22) et une structure de ceintures (40) ; dans lequel la structure de ceintures (40) comprend un certain nombre de couches de ceintures qui englobent au moins une couche de ceinture en forme de spirale (60) et au moins une couche de ceinture en forme de zigzag (70) ; dans lequel chaque ceinture parmi ladite au moins une couche de ceinture en forme de spirale (60) possède des câblés qui sont agencés en formant un angle de 5° ou moins par rapport à un plan équatorial du bandage pneumatique (10) et chaque ceinture parmi ladite au moins une couche de ceinture en forme de zigzag (70) possède des câblés qui sont agencés en formant un angle qui se situe dans une plage allant de 2° à 40°, en variante de 5° à 30°, par rapport au plan équatorial du bandage pneumatique (10) et qui s'étendent en alternance jusqu'à des points de retournement à chaque bord latéral de la structure de ceintures (40) ; dans lequel une première couche de ceinture parmi lesdites plusieurs couches de ceintures qui sont situées, dans la direction radiale, à l'extérieur de la carcasse (22), représente une desdites au moins une couche de ceinture en forme de spirale (60) ; et dans lequel la première couche de ceinture possède une largeur axiale qui est inférieure à la couche de ceinture la plus large, dans la direction axiale, parmi lesdites plusieurs couches de ceintures ; dans lequel le bandage pneumatique (10) comprend en outre une bande de roulement (20) qui comprend deux rainures principales ou plus (17a, 19a, 17b, 19b) qui s'étendent dans la direction circonférentielle de manière continue autour du bandage pneumatique (10) et qui définissent un certain nombre de nervures (25a, 23a, 21, 23b, 25b) qui englobent une nervure qui est située, dans la direction axiale, le plus à l'extérieur (25a, 25b) de chaque côté latéral de la bande de roulement (20) ; **caractérisé en ce que**, dans des conditions de 10 % à 100 % de la pression de gonflage nominale du bandage pneumatique (10) et d'absence de charge, la hauteur de chaque nervure, dans la direction radiale, parmi les deux nervures qui sont situées, dans la direction axiale, le plus à l'extérieur (25a, 25b) est supérieure à celle d'une nervure respective suivante la plus proche (23a, 23b) qui est située, dans la direction axiale, à l'intérieur de la nervure respective située le plus à l'extérieur, dans la direction axiale (25a, 25b).

2. Bandage pneumatique selon la revendication 1, dans lequel lesdites deux rainures principales ou plus (17a, 19a, 17b, 19b) représentent quatre rainures (17a, 19a, 17b, 19b) et lesdites plusieurs nervures (25a, 23a, 21, 23b, 25b) représentent cinq nervures (25a, 23a, 21, 23b, 25b) ; dans lequel les deux nervures qui sont situées le plus à l'extérieur dans la direction axiale (25a, 25b) représentent une paire de nervures d'épaulements ; dans lequel les quatre rainures principales (17a, 19a, 17b, 19b) et les cinq nervures (25a, 23a, 21, 23b, 25b) englobent deux rainures principales internes dans la direction axiale (17a, 17b) qui sont disposées de chaque côté d'une nervure centrale (21), deux rainures principales externes dans la direction axiale (19a, 19b), une paire de nervures intermédiaires (23a, 23b) qui sont chacune définies par des rainures principales adjacentes internes dans la direction axiale et externes dans la direction axiale (17a, 19a, 17b, 19b) ; et dans lequel lesdites nervures d'épaulements (25a, 25b) sont chacune définies par une rainure principale externe dans la direction axiale (19a, 19b) et par un épaulement correspondant (16a, 16b) du bandage pneumatique (10).

3. Bandage pneumatique selon au moins une des revendications précédentes, dans lequel la hauteur de chaque nervure parmi les deux nervures qui sont situées, dans la direction axiale, le plus à l'extérieur (25a, 25b), est supérieure, à concurrence d'une valeur ou d'un espace libre allant de 1 mm à 7 mm ou qui se situe dans une plage allant de 3 à 7 mm, à celle de la nervure respective suivante la plus proche (23a, 23b) qui est située, dans la direction axiale, à l'intérieur de la nervure respective située le plus à l'extérieur, dans la direction axiale (25a, 25b).

4. Bandage pneumatique selon au moins une des revendications précédentes, dans lequel une deuxième couche de ceinture de la structure de renforcement de ceinture qui est située à l'extérieur, dans la direction radiale, de la première couche de ceinture, représente une couche de ceinture choisie parmi ladite au moins une couche de ceinture en forme de zigzag (70) ; et dans laquelle lesdits câblés de la deuxième couche de ceinture sont disposés en formant un angle qui se situe dans une plage allant de 10° à 30° par rapport au plan équatorial.

5. Bandage pneumatique selon au moins une des revendications précédentes, dans lequel les câblés de la deuxième couche de ceinture comprennent un polyamide et/ou un polyamide aromatique ; et/ou dans lequel les câblés de la première couche de ceinture comprennent un polyamide et/ou un polyamide aromatique.

6. Bandage pneumatique selon au moins une des revendications précédentes, dans lequel les câblés de la première couche de ceinture sont disposés en formant un angle de 3° ou moins par rapport à mon plan équatorial.

7. Bandage pneumatique selon au moins une des revendications précédentes 1 à 3, dans lequel une deuxième couche de ceinture de la structure de ceintures (40), qui est située, dans la direction radiale, à l'extérieur de la première couche de ceinture, représente une couche de ceinture choisie parmi ladite au moins une couche de ceinture en forme de spirale.

8. Bandage pneumatique selon au moins une des revendications précédentes, dans lequel une troisième couche de ceinture de la structure de ceintures (40), qui est située et, dans la direction radiale, à l'extérieur de la deuxième couche de ceinture, représente une couche de ceinture choisie parmi ladite au moins une couche de ceinture en forme de zigzag.

9. Bandage pneumatique selon au moins une des revendications précédentes, dans lequel la première ceinture représente la couche de ceinture la plus étroite dans la direction axiale parmi lesdites plusieurs couches de ceintures.

10. Bandage pneumatique selon au moins une des revendications précédentes, qui comprend en outre un talon (14) qui est formé à partir d'un certain nombre de câbles (15) munis d'une gaine qui entoure une partie centrale (13) ; dans lequel la partie centrale (13) représente une matière légère à base d'un métal ou d'un alliage de métal qui possède un poids spécifique qui est inférieur à celui de l'acier.

11. Bandage pneumatique selon au moins une des revendications précédentes, dans lequel la carcasse (22) comprend un certain nombre de nappes de carcasse (26) qui sont enroulées autour du talon (14) ; et dans lequel des câblés desdites plusieurs nappes de carcasse (26) comprennent un polyamide et/ou un polyamide aromatique.

12. Bandage pneumatique selon au moins une des revendications précédentes, dans lequel le bandage pneumatique (10) est un bandage pneumatique destiné à un avion.

FIG. 1

FIG. 2A

FIG. 2B

EP

radial

axial

10

25a

19a

23a

40

16, 16a

25b

20

16, 16b

19b

22

23b

17b

21

17a

FIG. 2B

FIG. 3

FIG. 4

FIG. 7

FIG. 10

FIG. 5

FIG. 8

FIG. 11

FIG. 6

FIG. 9

EP 4 371 785 B1

FIG. 12

FIG. 13

FIG. 14

FIG. 15

FIG. 16

FIG. 17

FIG. 18

FIG. 19

EP 4 371 785 B1

Worn tread shape

⬆ Worn out groove

⬆ Exposed cords from belt layers

FIG. 20B

FIG. 20A

Worn tread shape

Worn out groove

Exposed cords from belt layers

FIG. 21B

FIG. 21A

Worn tread shape

Worn out groove

Exposed cords from belt layers

**FIG. 22B**

**FIG. 22A**

**EP 4 371 785 B1**

**REFERENCES CITED IN THE DESCRIPTION**

**Patent documents cited in the description**

- EP 1800902 A1
- EP 2394822 A1
- US 6571847 B
- US 4893665 A
- US 4155394 A
- US 6799618 B